# EUROPÄISCHE PATENTSCHRIFT

(11) **EP 0 529 283 B1**
(45) Veröffentlichungstag und Bekanntmachung des Hinweises auf die Patenterteilung: **30.10.1996**
(21) Anmeldenummer: 92112239.6
(22) Anmeldetag: 17.07.1992
(51) Int. Cl.: H04L 12/56, H04Q 11/04

(54) **Verfahren zur Bitfehlerreduktion in digitalen Kommunikationssystemen**
Method for the reduction of the bit error rate in digital communication systems
Procédé pour la diminution du taux d'erreurs dans un système de communication numérique

(30) Priorität: 27.08.1991 DE 4128412
(43) Veröffentlichungstag der Anmeldung: 03.03.1993
(73) Patentinhaber: SIEMENS AKTIENGESELLSCHAFT, 80333 München (DE)
(72) Erfinder: Löbig, Norbert, Dr. rer nat., W-6100 Darmstadt 12 (DE)

(56) Entgegenhaltungen:
- EP-A- 0 093 523
- DE-A- 3 513 181
- FR-A- 2 233 780

## Beschreibung

Die zur Datenübertragung verwendeten analogen und digitalen Übertragungsverfahren auf Leitungen und Kabeln sind störenden Einflüssen, z. B. elektromagnetischen Feldern ausgesetzt, die die zu übertragenden Informationen verändern, indem z. B. ein oder mehrere Bits während der Übertragung 'umgedreht'werden. Da insbesondere internationale Weitverkehrs-Verbindungen gegenüber Bitfehlern anfällig sind, haben internationale Normierungsgremien - wie z.B. CCITT - Minimalvorgaben für Bitfehlerraten festgelegt. Optische Übertragungsstrecken sind äußeren Einflüssen erheblich weniger unterworfen, so daß die Übertragungssicherheit bei der Verwendung optischer Übertragungsstrecken sehr hoch ist.

Generell setzt sich jede Übertragungsstrecke aus insgesamt zwei Anteilen zusammen:
- ein Anteil betrifft die Übertragung der Informationen über eine physikalische Strecke zwischen zwei Knotenpunkten. Diese Strecken werden zunehmend durch optische Nachrichtenkabel realisiert.
- Ein weiterer Anteil betrifft die Durchschaltung der Informationen in den jeweiligen Knoten, in denen Kommunikationssysteme installiert sind.
Durch die Verwendung optischer Übertragungssysteme ist der potentielle Störeinfluß beim übertragungstechnischen Anteil entscheidend verringert worden; während der Durchschaltevorgänge in den Koppelfeldern der Kommunikationssysteme treten demgegenüber häufig Bitfehler auf.

Aufgrund ihrer zentralen Bedeutung für die Kommunikationssysteme sind die Koppelfelder in der Regel gedoppelt oder dreifach ausgeführt. Dies ermöglicht es, bei Fehlfunktion einer Koppelfeldebene den Bitstrom über eine andere Koppelfeldebene durchzuschalten. Dies gilt insbesondere für Fehler, die zu einem Totalausfall einer Koppelfeldebene führen.

Problematisch sind jedoch z.B. durch Alterung einzelner Bauteile hervorgerufene Bitverfälschungen während der Durchschaltung eines Bitstroms. Solche Fehler können nur schwer analysiert und eliminiert werden, da sie auf die Funktion des Koppelfeldes als Durchschalteeinheit keinerlei Einfluß haben.

Fehlererkennungsverfahren zur Erkennung und Korrektur von Bitfehlern in Koppelfeldern werden z.B. in Form einer Mitlaufüberwachung realisiert. Aus der deutschen Offenlegungsschrift 24 27 668 ist ein solches Verfahren bekannt. Dort wird vor dem eigentlichen Durchschaltevorgang im Koppelfeld den die Information prägenden Informationsworten pro Kanal ein zusätzliches Paritybit zugefügt, wobei ein Informationswort in der Regel aus acht Bit besteht. Generell versteht man unter einem Paritybit die binäre Quersumme über die einzelnen Bits des entsprechenden Informationswortes. Nach dem Durchschaltevorgang wird erneut eine binäre Quersumme des durchgeschalteten Informationswortes ermittelt und mit dem übertragenen Paritybit verglichen. Weichen das mitübertragene und neu ermittelte Paritybit voneinander ab, so liegt ein Übertragungsfehler vor, der in einem entsprechenden Tabellenspeicher festgehalten wird. Somit lassen sich über bestimmte Zeiträume hinweg Aussagen über den Zustand der entsprechenden Koppelfeldebenen machen. Diese Aussagen sind statistischer Natur; somit kann vorzugsweise jene Koppelfeldebene zur Durchschaltung der Bitströme verwendet werden, die in der Vergangenheit die geringste Bitfehlerrate aufgewiesen hat.

Problematisch bei diesem Verfahren ist jedoch, daß die Verfälschung einer geraden Zahl der Bits eines Informationswortes nicht als Bitfehler erkannt wird, da die ausgangsseitig durchgeführte Paritybildung zum selben Ergebnis führt wie die eingangsseitig erfolgte Partitybildung. Weiterhin lassen sich zwar bei erkannten Bitfehlern statistische Aussagen über die Güte der Durchschaltung der Informationsworte machen, doch der Bitfehler bleibt unkorrigiert und wird somit zum Endteilnehmer weitergeleitet. Diese Vorgehensweise beinhaltet die Gefahr, daß sich in weiteren Netzknoten zusätzliche Bitfehler aufaddieren.

Der Erfindung liegt die Aufgabe zugrunde, die Auswirkung von Bitfehlern in den Koppelfeldern digitaler Kommunikationssysteme möglichst gering zu halten, indem zumindest zumeist die korrekten Informationsworte zum Endteilnehmer durchgeschaltet werden.

Diese Aufgabe wird ausgehend vom Oberbegriff des Patentanspruches 1 erfindungsgemäß durch dessen kennzeichnende Merkmale gelöst.

Wesentlich für die Erfindung ist die Verdoppelung der Informationsworte sowie die anschließende parallel durchgeführte Durchschaltung über je zwei aktiv geschaltete Koppelfeldebenen. Dies ermöglicht zum einen eine ausgangsseitige Bewertung der Paritybits eines jeden durchgeschalteten Informationswortes sowie zum anderen einen bitweisen Vergleich beider Informationsworte. Eine derart kombinierte Überprüfung läßt in der Regel eindeutige Rückschlüsse auf eventuell aufgetretene Bitfehler zu und erlaubt die Weiterleitung des korrekt durchgeschalteten Informationswortes zum Endteilnehmer. Dadurch wird eine sehr geringe Fehlerquote in den Netzknoten erreicht, ein Umstand, der bei der Verwendung optischer Ubertragungsstrecken zwischen den Netz knoten besonders relevant ist.

Die Erfindung sei anhand eines figürlich dargestellten Ausführungsbeispiels näher erläutert.

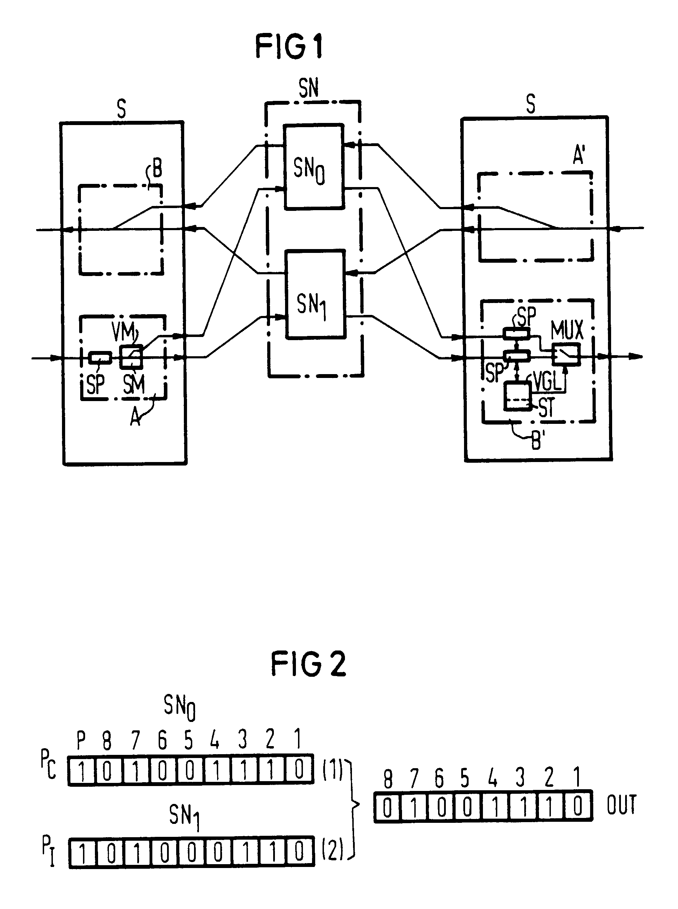

FIG 1 zeigt ein Koppelfeld SN eines digitalen Kommunikationssystems KS. Das Koppelfeld SN ist gedoppelt ausgestaltet. Dabei sind beide Koppelfeldebenen SN über Schnittstellenelemente S mit dem Kommunikationsnetz N verbunden. Die Schnittstellenelemente S enthalten die Logikelemente A, A' sowie die Logikelemente B, B'.

Die Logikelemente A, A' enthalten Speicherelemente SP, Verteilermodule VM und Steuermodule SM. Ein über das Kommunikationsnetz N ankommendes Informationswort, das im Ausführungsbeispiel acht Bit groß sein soll, wird in den Speicherelementen SP kurzfrisitig zwischengespeichert. Hier erfolgt die Bildung des Paritybits. Anschließend wird das Informationswort zusammen mit dem Paritybit über die Verteilermodule VM auf die Koppelfeldebenen SN₀, SN₁ aufgespaltet. Dieser Vorgang wird von den Steuermodulen SM gesteuert und überwacht.

Nach dem Durchschaltevorgang über die jeweilige Koppelfeldebene SN₀, SN₁ werden in den Logikelementen B, B' die durchgeschalteten Informationsworte auf eventuell während des Durchschaltevorgangs aufgetretene Bitfehler hin untersucht. Die Logikelemente B, B' enthalten zu diesem Zweck Speicherelemente SP, Vergleicherelemente VGL, Steuerelemente ST sowie Multiplexelemente MUX. Die Speicherelemente SP führen je eine kurzfristige Zwischenspeicherung der durchgeschalteten Informationsworte durch, anschließend erfolgt bitweise eine Differenzbildung der beiden durchgeschalteten Informationsworte durch die Vergleicherelemente VGL sowie eine erneute Paritybildung beider Informationsworte; diese werden mit dem vor dem Durchschaltevorgang gebildeten und mitübertragenen Paritybit verglichen.

Zur Bitfehlererkennung werden somit zum einen die Informationsworte bitweise miteinander verglichen sowie zum anderen ein ausgangsseitiger Paritytest beider Informationsworte durchgeführt. Das Ergebnis jener Bewertungen wird von statistischen Bewertungsprozeduren f(S) festgehalten. Somit lassen sich zu einem späteren Zeitpunkt (statistische) Aussagen über die Qualität der Durchschaltung über die jeweilige Koppelfeldebene SN₀, SN₁ machen.

Sind die über die Koppelfeldebenen SN₀, SN₁ geleiteten Informationsworte verschieden und ist ein Informationswort konsistent hinsichtlich seines Paritybits, so wird jenes Informationswort in Richtung Endteilnehmer weitergeleitet. In allen anderen Fällen erfolgt die Weiterleitung eines der beiden Informationsworte in Abhängigkeit der Bewertungsprozeduren f(S).

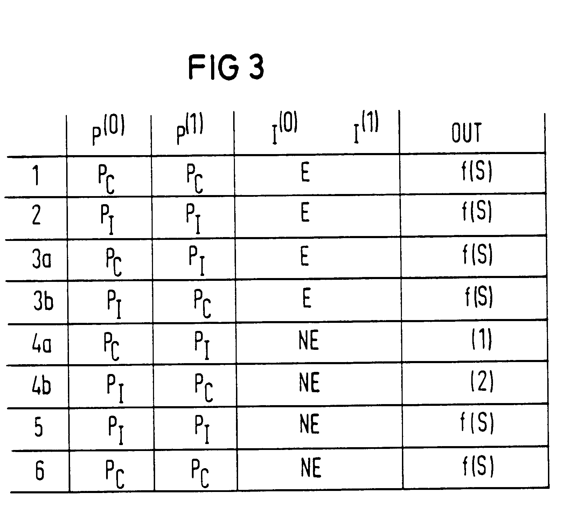

Die Bewertungsprozeduren f(S) kommen insbesondere dann zum Tragen, wenn bei Anwendung des erfindungsgemäßen Verfahrens - also ausgangsseitige Paritybewertung in Verbindung mit einer bitweisen Differenzbildung - eine eindeutige Bestimmung des bitfehlerbehafteten Informationswortes nicht möglich ist. Die Bewertungsprozeduren f(S) führen statistische Daten über die Qualität der Durchschaltevorgänge beider Koppelfeldebenen. Diese statistischen Daten werden im Falle erkannter und eindeutig zuordenbarer Bitfehler aktualisiert. Somit wird im Zweifelsfall das Informationswort in Richtung Endteilnehmer über die Koppelfeldebene weitergeleitet, die in der Vergangenheit die geringste Bitfehlerrate aufgewiesen hat. Im in FIG 2 dargestellten Ausführungsbeispiel wird davon ausgegangen, daß Bit 4 des Informationswortes 2 verfälscht übertragen wurde. Nach dem erfindungsgemäßen Verfahren wird somit das Informationswort 1 weitergeleitet, da hier Paritykonsistenz vorhanden ist. Die in FIG 3 dargestellte Tabelle zeigt eine Fallstudie des erfindungsgemäßen Verfahrens. Hier sind alle Möglichkeiten einer Bitverfälschung kombinatorisch erfaßt. Stimmen beispielsweise die Bits des Informationswortes I⁽⁰⁾ - also des Informationswortes, das über die Koppelfeldebene 0 geleitet wurde - mit den Bits des Informationswortes I⁽¹⁾ - also des Informationswortes, das über die Koppelfeldebene 1 geleitet wurde - überein, und sind gleichzeitig die Zustände der Paritybits P⁽⁰⁾, P⁽¹⁾ der beiden Informationsworte I⁽⁰⁾, I⁽¹⁾ inkonsistent hinsichtlich der Parityinformation, so muß die statistische Bewertungsfunktion f(S) entscheiden, welcher der beiden Informationsworte zum Endteilnehmer durchgeschaltet wird, da in diesem Fall eine eindeutige Aussage darüber, welches Bit bei der Durchschaltung verfälscht wurde, nicht möglich ist.

Das in FIG 2 behandelte Beispiel einer Verfälschung von Bit 4 des Informationswortes I⁽¹⁾ ist aus der Tabelle unter 4a ersichtlich. Hier sind eindeutige Aussagen über das verfälschte Bit möglich; demzufolge wird das Informationswort I⁽¹⁾zum Endteilnehmer weitergeleitet.

Eine besonders vorteilhafte Ausgestaltung der Erfindung liegt darin, daß die Logikelemente A, A', B, B' in einem hochintegrierten Baustein - einem sog. ASIC-Baustein - implementierbar sind.

Solche Bausteine werden heute bereits vielfältig eingesetzt. Weiterhin wird durch die Verwendung derartiger Bausteine sichergestellt, daß die bei der Abspeicherung der Informationsworte entstehenden Verzögerungszeiten minimiert werden und für die praktischen Überlegungen vernachlässigt werden können.

## Patentansprüche

1. Verfahren zur Bitfehlerreduktion in digitalen Kommunikationssystemen mit einem aus je zwei Koppelfeldebenen bestehenden Koppelfeld (SN), das über Schnittstellenelemente (S) in ein Kommunikationsnetz (N) eingebunden ist, wobei die Schnittstellenelemente (S)
- erste Elemente (A, A') enthalten, die über das Kommunikationsnetz (N) herangeführte, aus mehreren Bits (l...M) bestehende Informationsworte (I⁽⁰⁾...I^{(N)}) vor dem Durchschaltevorgang mit jeweils einer, aus einer über die Bits (l...M) der Informationsworte (I⁽⁰⁾...I^{(N)}) gebildeten, aus wenigstens einem Bit bestehenden Prüfinformation (P) versehen, und
- zweite Elemente (B', B) enthalten, die nach dem Durchschaltevorgang erneut die aus wenigstens einem Bit bestehende Prüfinformation über die Bits (l...M) der durchgeschalteten Informationsworte (I⁽⁰⁾...I^{(N)}) bilden und das Resultat mit der mitübertragenen Prüfinformation (P) vergleichen, und
- eine Bewertungsprozedur (f(S)) vorgesehen ist, die aus einer Prüfinformationsbewertung statistische Daten über die Qualität der Durchschaltung gewinnt,
**dadurch gekennzeichnet,**
daß die ersten Elemente (A, A' ) das ankommende Informationswort als Resultat einer Prüfinformationsbewertung mit einer aus wenigstens einem Bit bestehenden Prüfinformation versehen, spiegelbildlich aufspalten und über je eine Koppelfeldebene (SN₀, SN₁) weiterleiten und die zweiten Elemente (B, B') jedes der durchgeschalteten Informationsworte zum einen erneut einer Prüfinformationsbewertung unterziehen und zum anderen bitweise miteinander vergleichen und
- bei Nichtübereinstimmung der Informationsworte das Informationswort zum Endteilnehmer weiterleiten, das konsistent hinsichtlich seiner mitübertragenen Prüfinformation (P) ist,
- oder bei Nichterfülltsein dieser Bedingung das Informationswort zum Endteilnehmer weiterleiten, das über die Koppelfeldebene mit den besseren statistischen Qualitätsdaten geleitet wurde.

2. Verfahren nach Anspruch 1,
**dadurch gekennzeichnet**,
daß die Prüfinformation (P) die Parität des Informationswortes ist.

3. Anordnung zur Durchführung des Verfahrens zur Bitfehlerreduktion in digitalen Kommunikationssystemen nach Anspruch 1, mit einem aus je zwei Koppelfeldebenen bestsehenden Koppelfeld (SN), das über Schnittstellenelemente (S) in ein Kommunikationsnetz (N) eingebunden ist, wobei die Schnittstellenelemente (S) erste Elemente (A, A') enthalten, die über das Kommunikationsnetz (N) herangeführte, aus mehreren Bits (I ... M) bestehende Informationsworte (I⁽⁰⁾ ... I^{(N))} vor dem Durchschaltevorgang mit jeweils einer, aus einer über die Bits (I...M) der Informationsworte (I⁽⁰⁾...I^{(N)}) gebildeten, aus wenigstens einem Bit bestehenden Prüfinformation (P) versehen, und zweite Elemente (B', B) enthalten, die nach dem Durchschaltevorgang erneut die aus wenigstens einem Bit bestehende Prüfinformation über die Bits (I...M) der durchgeschalteten Informationsworte (I⁰...I^{(N)}) bilden und das Resultat mit der mitübertragenen Prüfinformation (P) vergleichen, und eine Bewertungsprozedur (f (S)) vorgesehen ist, die aus einer Prüfinformationsbewertung statistische Daten über die Qualität der Durchschaltung gewinnt,
**dadurch gekennzeichnet**,
daß die ersten Elemente (A, A') derart ausgebildet sind, daß das ankommende Informationswort als Resultat einer Prüfinformationsbewertung mit einer aus wenigstens einem Bit bestehenden Prüfinformation versehen, spiegelbildlich aufgespalten und über je eine Koppelfeldebene (SN₀, SN₁) weitergeleitet wird, und
daß die zweiten Elemente (B, B') derart ausgebildet sind, daß jedes der durchgeschalteten Informationsworte zum einen erneut einer Prüfinformationsbewertung unterzogen und zum an deren bitweise miteinander verglichen wird und bei Nichtübereinstimmung der Informationsworte das Informationswort zum Endteilnehmer weitergeleitet wird, das konsistent hinsichtlich seiner mitübertragenen Prüfinformation (P) ist, oder bei Nichterfülltsein dieser Bedingung das Informationswort zum Endteilnehmer weitergeleitet wird, das über die Koppelfeldebene mit den besseren statistischen Qualitätsdaten geleitet wurde.

4. Anordnung nach Anspruch 3,
**dadurch gekennzeichnet**,
daß die ersten Elemente (A, A') sowie die zweiten Elemente (B, B') ASIC-Bausteine sind.

## Claims

1. Method for bit error reduction in digital communication systems having a switching network (SN) which comprises respectively two switching network levels and is integrated into a communication network (N) via interface elements (S), it being the case that the interface elements (s)
- contain first elements (A, A') which, before the switching-through operation provide information words (I⁽⁰⁾...I^{(N)}) arriving via the communication network (N) and comprising a plurality of bits (1...M), with in each case one item of check information (P), formed via the bits (1. ..M) of the information words (I⁽⁰⁾...I^{(N)}) and comprising at least one bit, and
- contain second elements (B', B) which after the switching through operation again form the check information, comprising at least one bit, via the bits (1...M) of the switched-through information words (I⁽⁰⁾...I^{(N)}) and compare the results with the co-transmitted check information (P), and
- an evaluation procedure (f(S)) is provided which obtains statistical data on the quality of the switching through from an evaluation of the check information,
characterized in that the first elements (A, A') provide the incoming information word with an item of check information comprising at least one bit as a result of an evaluation of check information, split said incoming information word in mirror-image fashion, and relay it via one switching network level (SN₀, SN₁) each, and the second elements (B, B') on the one hand subject each of the switched-through information words to an evaluation of check information, and on the other hand compare them with one another bit by bit and,
- given noncorrespondence of the information words, relay to the terminating subscriber that information word which is consistent with respect to its co-transmitted check information (P),
- or, given nonfulfillment of this condition, relay to the terminating subscriber that information word which was directed over the switching network level having the better statistical quality data.

2. Method according to Claim 1, characterized in that the check information (P) is the parity of the information word.

3. Arrangement for carrying out the method for bit error reduction in digital communication systems according to Claim 1, having a switching network (NS) which comprises respectively two switching network levels and is integrated into a communication network (N) via interface elements (S), it being the case that the interface elements (S) contain first elements (A, A') which, before the switching-through operation provide information words (I⁽⁰⁾...I^{(N)}) arriving via the communication network (N) and comprising a plurality of bits (I...M), with in each case one item of check information (P), formed via the bits (I...M) of the information words (I⁽⁰⁾...I^{(N)}) and comprising at least one bit, and contain second elements (B', B) which after the switching through operation again form the check information, comprising at least one bit, via the bits (I...M) of the switched-through information words (I⁽⁰⁾...I^{(N)}) and compare the results with the co-transmitted check information (P), and an evaluation procedure (f(S)) is provided which obtains statistical data on the quality of the switching through from an evaluation of the check information, characterized in that the first elements (A, A') are constructed in such a way that the incoming information word is provided with an item of check information comprising at least one bit as a result of an evaluation of check information, is split in mirror-image fashion, and is relayed via one switching network level (SN₀, SN₁) each, and in that the second elements (B, B') are constructed in such a way that each of the switched-through information words is, on the one hand, subjected to an evaluation of check information and, on the other hand, they are compared with one another bit by bit and, given noncorrespondence of the information words, there is relayed to the terminating subscriber that information word which is consistent with respect to its co-transmitted check information (P), or, given nonfulfillment of this condition, there is relayed to the terminating subscriber that information word which was directed over the switching network level having the better statistical quality data.

4. Arrangement according to Claim 3, characterized in that the first elements (A, A') and the second elements (B, B') are ASIC modules.

## Revendications

1. Procédé de réduction du taux d'erreurs sur les bits dans des systèmes de communication numériques, comportant un réseau (SN) de connexion qui est constitué de deux plans de connexion et qui est intégré à un réseau (N) de communication par l'intermédiaire d'éléments (S) d'interface, les éléments (S) d'interface comportant
- des premiers éléments (A, A') qui, avant l'opération d'interconnexion, munissent des mots (I⁽⁰⁾...I^{(N)}) d'information amenés par l'intermédiaire du réseau (N) de communication, et constitués de plusieurs bits (1...M), d'une information (P) de contrôle concernant les bits (1...M) des mots (I⁽⁰⁾...I^{(N)}) d'information, et constituée d'au moins un bit, et
- des deuxièmes éléments (B, B') qui, après l'opération d'interconnexion, reforment l'information de contrôle concernant les bits (1...M) des mots (I⁽⁰⁾...I^{(N)}) d'information transmis et constituée d'au moins un bit, et comparent le résultat à l'information (P) de contrôle transmise conjointement, et
- il est prévu, une procédure f(S) d'évaluation, qui déduit d'une évaluation d'information de contrôle des données statistiques concernant la qualité de l'interconnexion,
caractérisé en ce que les premiers éléments (A, A') munissent le mot d'information qui arrive, comme résultat d'une évaluation d'information de contrôle, d'une information de contrôle constituée d'au moins un bit, le divise en en formant une image comme dans un miroir et le transmettent par l'intermédiaire de chaque plan (SN₀, SN₁) de réseau de connexion, et en ce que les deuxièmes éléments (B, B') d'une part soumettent à nouveau chacun des mots d'information transmis à une évaluation d'information de contrôle et, d'autre part, les comparent entre eux bit à bit, et
- lorsque les mots d'information ne coïncident pas, retransmettent à l'abonné final le mot d'information qui est stable en ce qui concerne son information (P) de contrôle transmise conjointement,
- ou, lorsque cette condition n'est pas remplie, retransmettent à l'abonné final le mot d'information qui a été transmis par l'intermédiaire du plan de réseau de connexion ayant les meilleures données statistiques de qualité.

2. Procédé suivant la revendication 1, caractérisé en ce que l'information (P) de contrôle est la parité du mot d'information.

3. Dispositif de mise en oeuvre du procédé de réduction du taux d'erreurs sur les bits dans des systèmes de communication numérique suivant la revendication 1, comportant un réseau (SN) de connexion qui est constitué de deux plans de connexion et qui est intégré à un réseau (N) de communication par l'intermédiaire d'éléments (S) d'interface, les éléments (S) d'interface comportant des premiers éléments (A, A') qui, avant l'opération d'interconnexion, munissent des mots (I⁽⁰⁾...I^{(N)}) d'information amenés par l'intermédiaire du réseau (N) de communication et constitués de plusieurs bits (1...M), d'une information (P) de contrôle concernant les bits (1...M) des mots (I⁽⁰⁾...I^{(N)}) d'information, constituée d'au moins un bit, et des deuxièmes éléments (B, B') qui, après l'opération d'interconnexion, reforment l'information de contrôle concernant les bits (1...M) des mots (I⁽⁰⁾...I^{(N)}) d'information transmis et constituée d'au moins un bit, et comparent le résultat à l'information (P) de contrôle transmise conjointement, et il est prévu une procédure f(S) d'évaluation, qui, déduit d'une évaluation d'information de contrôle des données statistiques concernant la qualité de l'interconnexion, caractérisé en ce que les premiers éléments (A, A') sont constitués de façon à munir le mot d'information qui arrive, comme résultat d'une évaluation d'information de contrôle, d'une information de contrôle constituée d'au moins un bit, à le diviser en en formant une image comme dans un miroir et à le transmettre par l'intermédiaire de chaque plan (SN₀, SN₁) de réseau de connexion, et en ce que les deuxièmes éléments (B, B') sont constitués de manière d'une part à soumettre à nouveau chacun des mots d'information transmis à une évaluation d'information de contrôle et, d'autre part, à les comparer entre eux bit à bit, et, lorsque les mots d'information ne coïncident pas, à retransmettre à l'abonné final le mot d'information qui est stable en ce qui concerne son information (P) de contrôle transmise conjointement, ou, lorsque cette condition n'est pas remplie, à retransmettre à l'abonné final le mot d'information qui a été transmis par l'intermédiaire du plan de réseau de connexion ayant les meilleures données statistiques de qualité.

4. Dispositif suivant la revendication 3, caractérisé en ce que les premiers éléments (A, A'), ainsi que les deuxièmes éléments (B, B') sont des modules ASIC.
